# EUROPÄISCHE PATENTSCHRIFT

(11) **EP 2 905 121 B1**
(45) Veröffentlichungstag und Bekanntmachung des Hinweises auf die Patenterteilung: **21.08.2019**
(21) Anmeldenummer: 15160153.1
(22) Anmeldetag: 11.05.2011
(51) Int. Cl.: B29C 64/135, B33Y 10/00, B33Y 50/02, B29C 64/386, B29C 64/273, B33Y 30/00

(54) **VORRICHTUNG SOWIE VERFAHREN ZUR ERZEUGUNG DREIDIMENSIONALER STRUKTUREN**
DEVICE AND METHOD FOR PRODUCING THREE-DIMENSIONAL STRUCTURES
DISPOSITIF ET PROCÉDÉ DE PRODUCTION DE STRUCTURES TRIDIMENSIONNELLES

(30) Priorität: 11.05.2010 DE 102010020158
(43) Veröffentlichungstag der Anmeldung: 12.08.2015
(62) Teilanmeldung aus: 11721021.1
(73) Patentinhaber: Fraunhofer-Gesellschaft zur Förderung der angewandten Forschung e.V., 80686 München (DE)
(72) Erfinder: Houbertz, Ruth, 97074 Würzburg (DE); Stichel, Thomas, 90403 Nürnberg (DE); Steenhusen, Sönke, 97072 Würzburg (DE)
(74) Vertreter: Strehl Schübel-Hopf & Partner

(56) Entgegenhaltungen:
- EP-A2- 0 379 068
- WO-A2-01/40866
- DE-A1- 10 235 427
- US-A1- 2006 198 918
- MARUO S ET AL: "Movable microstructures made by two-photon three-dimensional microfabrication", MICROMECHATRONICS AND HUMAN SCIENCE, 1999. MHS '99. PROCEEDINGS OF 199 9 INTERNATIONAL SYMPOSIUM ON NAGOYA, JAPAN 23-26 NOV. 1999, PISCATAWAY, NJ, USA,IEEE, US, 23. November 1999 (1999-11-23), Seiten 173-178, XP010370772, DOI: 10.1109/MHS.1999.820002 ISBN: 978-0-7803-5790-7

## Beschreibung

Die vorliegende Erfindung betrifft eine Vorrichtung sowie ein Verfahren zur Erzeugung dreidimensionaler Strukturen, wie Körper oder Oberflächenstrukturen, aus einem zu verfestigendem Material, insbesondere aus einem organopolysiloxanhaltigen Material, durch ortsselektives Verfestigen desselben infolge lichtinduzierter organischer Vernetzung.

Aus dem Stand der Technik ist bekannt, dreidimensionale Körper oder Oberflächenstrukturen z.B. durch lichtinduzierte Prozesse, insbesondere durch organische Vernetzung zu erzeugen, indem zunächst nur eine Schicht oder Ebene als zweidimensionaler Bestandteil der zu erschaffenden Struktur erzeugt wird und der dreidimensionale Aufbau des Körpers bzw. der Oberflächenstruktur durch sukzessives Prozessieren von aufeinanderfolgenden zweidimensionalen Schichten oder Ebenen aufgebaut wird. Beispiele für solche zweidimensional arbeitenden Verfahren sind Stereolithographie, selektives Lasersintern (SLS) oder 3D-Drucken (3DP). Nachteilig an zweidimensionalen Verfahren sind die verhältnismäßig langen Produktionszeiten, da die herzustellenden Körper schichtweise generiert werden und nach jeder erfolgten Schichtverfestigung eine neue zu verfestigende Schicht präpariert werden muss. Diese Nachteile wiegen besonders schwer, wenn die herzustellenden Körper mit Größen bis in den Milli- und Zentimeterbereich erzeugt werden sollen.

In einer speziellen Variante der Stereolithographie erfolgt die Belichtung durch den transparenten Boden des Badbehälters hindurch, um eine Wechselwirkung des entstehenden Körpers mit der über der Badoberfläche befindlichen Gasatmosphäre, z.B. eine Oxidationsreaktion, zu vermeiden. Das flüssige Material wird dabei in unmittelbarer Nähe des Behälterbodens verfestigt. Um das Anhaften des sich verfestigenden Materials am Boden zu vermeiden, muss dieser mit einer nicht-polymerisierbaren Flüssigkeit als Trennschicht überschichtet sein, siehe DE 41 02 260 A1, Anspruch 13. Dies macht das Verfahren schwer beherrschbar, denn beim Verschieben der Trägerplattform muss die verfestigbare Flüssigkeit in den Spalt zwischen der Trennschicht und der letzten verfestigten Schicht einfließen können, ohne dass die Trennflüssigkeit verwirbelt wird. Das Verfahren eignet sich daher kaum für die Herstellung von Körpern aus hochviskosen Ausgangsmaterialien, wie es - insbesondere lösungsmittelfreie - Organo-Polysiloxane häufig sind. Auch EP0379068 A2 offenbart eine Stereolithographie, wobei die Belichtung durch den transparenten Boden des Badbehälters hindurch erfolgt.

Schnellere Prozesse bieten dreidimensionale Verfahren, bei denen materialmodifizierende Strahlung direkt im Volumen eines noch unbearbeiteten, festen oder flüssigen Ausgangsmaterials interagiert. Aus der WO 03/037606 A1 ist die Verwendung von Zwei- oder Mehrphotonenpolymerisation bei der Verfestigung organopolysiloxanhaltiger Materialien bekannt, (die Polymerisation erfolgt durch Zwei-(TPA) oder Mehrphotonen-Absorption). Dabei wird Strahlung einer Wellenlänge verwendet, die unter normalen Umständen im Reaktivmaterial nicht absorbiert wird. Durch Fokussierung femtosekundenlanger Laserpulse in das Material kommt es im Brennpunkt der Optik zu Mehrphotonenabsorption, wodurch ähnliche chemische Veränderungen wie bei einer Benutzung von Laserstrahlung deutlich kürzerer Wellenlängen induziert werden können. Materialveränderungen können so gezielt im dreidimensionalen Raum ausgelöst werden.

Ein Nachteil bekannter dreidimensionaler Verfahren sowie Vorrichtungen zu deren Durchführung ist, dass Strukturen insbesondere bei hohen Anforderungen an Genauigkeit nur mit eingeschränkter Größe im Mikrometerbereich erzeugt werden können. Begründet ist dieser Nachteil in dem zur Erlangung einer ausreichenden Genauigkeit erforderlichen geringen Arbeitsabstand der Optik, also dem Abstand zwischen Brennebene und der Austrittslinse der Optik, der in der Regel variabel und abhängig von der numerischen Apertur der verwendeten Optik ist. So beträgt der Arbeitsabstand für hochauflösende Optiken mit einer numerischen Apertur von NA = 0,9 bis 1,4 ca. 500 µm bis 200 µm. Bei bekannten Verfahren bzw. Vorrichtungen zur Materialverfestigung durch Mehrphotonenpolymerisation wird das zu verfestigende Material beispielsweise in der Menge eines Tropfens zwischen zwei optischen Platten als Objektträger oder haftend an einem offenen Objektträger angeordnet. Um eine Belichtung unter definierten Verhältnissen zu ermöglichen, muss über eine definierte Grenzfläche belichtet werden. Bei zwischen zwei Platten angeordnetem Material erfolgt die Belichtung durch eine der beiden Platten von oben oder von unten. Bei einem offenen Objektträger erfolgt die Belichtung von unten durch die Unterseite des Objektträgers. Mit Nachteil können keine größeren Strukturen verfestigt werden, da aufgrund der Belichtung durch oder über den Objektträger Material auf der der Optik abgewandten Seite desselben nur in einem begrenzten, durch den Arbeitsstand der Optik bestimmten Abstand vom Objektträger verfestigt werden kann. Bei den derzeit bekannten dreidimensionalen Verfestigungsverfahren ist die Größe der herstellbaren Strukturen abhängig von der zu erzielenden Genauigkeit auf etwa 100 µm bis 700 µm beschränkt.

In der WO 92/00185 betrifft eine spezielle Vorrichtungsvariante eine vertikal (d.h. entlang der optischen Achse) bewegliche Fokussieroptik mit hoher numerischer Apertur, welche - zur Vermeidung von durch Flüssigkeit-Luft-Grenzflächen entstehenden Fehlern - in ein Bad mit demselben verfestigbaren Material eintaucht, das als Badmaterial für die Herstellung des verfestigten Körpers vorgesehen ist. Der Fokus der Vorrichtung befindet sich außerhalb dieses Bades in einem zweiten Bad.

DE 101 11 422 A schlägt für ein ähnliches Verfahren vor, den Badbehälter auf einem in der X-Y-Ebene verfahrbaren Tisch anzuordnen und in diesem eine Bauplattform vorzusehen, die in Z-Richtung gesteuert verfahrbar ist, um den Brennpunkt (Fokalbereich) in geeigneter Weise variabel positionieren zu können. Dabei erfolgt die Belichtung von oben in die offene Badoberfläche hinein. Alternativ erfolgt eine Bewegung des Fokus in X- und in Y-Richtung mit Hilfe einer Scannereinrichtung, d.h. mit einem oder mehreren beweglichen Spiegel(n). Bei diesem System kann keine hohe numerische Apertur der Optik verwendet werden und damit keine hohe Strukturauflösung bei gleichzeitig frei wählbarer Formkörpergröße erzielt werden. Fehler entstehen außerdem durch das Belichten über die offene Badoberfläche, die keine saubere optische Oberfläche darstellt.

Ausgehend von dem zuvor beschriebenen Stand der Technik liegt der vorliegenden Erfindung die Aufgabe zugrunde, eine Vorrichtung sowie ein Verfahren zur Erzeugung dreidimensionaler Körper oder Oberflächenstrukturen durch ortsselektives Verfestigen eines Materials infolge lichtinduzierter organischer Vernetzung zu schaffen, wobei im Wesentlichen beliebig geformte Körper und Strukturen insbesondere mit Abmessungen sowie Höhen im Milli- und Zentimeterbereich vorzugsweise bei gegenüber dem Stand der Technik verkürzten Produktionszeiten und entsprechend hoher Auflösung, geringem Materialaufwand und mit hoher Genauigkeit sowie Wiederholbarkeit erzeugt werden können. Insbesondere soll es die Erfindung ermöglichen, auch große Körper mit sehr hoher Genauigkeit erzeugen zu können.

Vorrichtungsseitig wird diese Aufgabe gelöst durch eine Vorrichtung nach Anspruch 1 zur Erzeugung dreidimensionaler Strukturen aus einem zu verfestigenden Material, insbesondere aus einem organopolysiloxanhaltigem Material.

Verfahrensseitig wird die Aufgabe gelöst durch ein Verfahren nach Anspruch 9 zur Erzeugung dreidimensionaler Strukturen aus einem zu verfestigendem Material.

Anders als bei aus dem Stand der Technik bekannten Vorrichtungen und Verfahren wird die einschränkende Wirkung des Arbeitsabstands der Fokussieroptik durch ihre Positionierbarkeit und ggf. diejenige der Trägerplattform im Bad relativ zum Brennpunkt/den Brennpunkten der Optik/Optiken in Z-Richtung überwunden. Bei Verwendung eines Scanners zur Positionierung des Brennpunktes/der Brennpunkte in der XY-Ebene entsteht nämlich das folgende Dilemma: Wird der Fokus in XY-Richtung über bewegliche Spiegel bewegt (Scanner-System), um den Brennpunkt entsprechend zu positionieren, muss die Fokussieroptik für die Herstellung großer Körper eine große Eingangsapertur (Größe der kreisrunden Eingangsöffnung, mehrere cm) haben, damit der von den sich bewegenden Spiegeln kommende Laserstrahl die Fokussieroptik nicht verlässt. Allerdings haben nur Objektive mit niedriger numerischer Apertur (NA) (<0,25) oder einfache Linsen sowie so genannte F-Θ-Objektive derart große Eingangsaperturen. Wegen der niedrigen numerischen Apertur vermindern diese sowohl die Strukturauflösung in axialer (Z-) Richtung als auch die laterale Auflösung eklatant (je nach tatsächlichen Gegebenheiten auf Voxel mit Länge (in Z-Richtung) von 0,5 bis 1 mm). Damit wird der eigentliche Vorteil der 2- und Mehrphotonenpolymerisation, nämlich die Herstellung sehr kleiner minimaler Strukturgrößen, kompensiert, und es lassen sich keine hochaufgelösten Strukturen herstellen, wie sie beispielsweise für die Biomedizin (z.B. poröse Scaffolds) oder optische Bauelemente benötigt werden. Wenn umgekehrt mit Objektiven hoher numerischer Apertur gearbeitet wird, ist der adressierbare Bereich in der Ebene aufgrund der entsprechend kleinen Eingangsaperturen stark eingeschränkt. Es lässt sich zeigen, dass selbst bei Nichtberücksichtigung der Aberrationen, die aufgrund der Verwendung eines Bades und der damit verbundenen Abweichungen des Lichtstrahls durch optisch "unsaubere" Oberflächen vom idealen Weg auftreten, bei einer numerischen Apertur von z.B. 0,95 der adressierbare Bereich auf einen Durchmesser von ca. 500 µm eingeschränkt ist. Wenn man dagegen einen Träger im Bad anordnen würde, der großflächig in X-Y-Ebene bewegbar ist, könnte man zwar die gewünschten Ergebnisse erzielen, allerdings nur mit Hilfe eines recht mühsamen Verfahrens: Solange der Träger still steht und der Fokus in Z-Richtung durch entweder Bewegen des Trägers oder der Optik und des Laserstrahls mit Hilfe eines Spiegels bewegt wird, lässt sich zwar eine hochaufgelöste Struktur erstellen, doch sind deren Dimensionen in X-Y-Ebene sehr klein. Vergrößern lassen sie sich durch eine Verschiebung des Trägers in X- und/oder Y-Richtung jeweils sequentiell um eine Distanz in der Größe des scannbaren Bereichs. Dieses so genannte "Stitchen" erfordert eine separate Positioniereinheit des Trägers für die X-Y-Ebene, was experimentell mühsam, kostenintensiv und schwierig umzusetzen ist. Weiterhin ist softwareseitig ein Mehraufwand erforderlich, da die Strukturgeometrie in mehreren Sektionen getrennt zu berechnen ist. Und schließlich bleiben die Nahtstellen zwischen den einzelnen Bereichen bei der gewünschten hohen Auflösung sichtbar. Gleiches gilt für eine Anordnung, bei der das Bad insgesamt auf einem verschiebbaren Tisch in X-Y-Ebene Bewegt werden kann. Will man große Strukturen erzeugen, muss man bei der Mehrphotonen-Strukturierung im Stand der Technik daher generell absichtlich auf ein gutes Auflösungsvermögen verzichten, und zwar erstens, weil man bei größerer Strukturbreite eine höhere Baurate erhält, und zweitens, weil ein hoher Arbeitsabstand (d. h. der Abstand der Austrittslinse des Objektivs zum Brennpunkt) die Voraussetzung dafür ist, dass die Struktur ausreichend groß werden kann (die Struktur kann nicht größer werden als der Arbeitsabstand ist). Bei konventionellen Objektiven ist der Arbeitsabstand jedoch umso größer, je kleiner die numerische Apertur ist.

Für den erfindungsgemäßen Badaufbau lässt sich im Gegensatz hierzu ein Objektiv mit hoher NA verwenden, auch für den Fall, dass große Formkörper hergestellt werden sollen. Denn diese Formkörper sind erfindungsgemäß unabhängig vom Arbeitsabstand herstellbar. Daher kann frei ausgewählt werden, ob feine, hochaufgelöste Strukturen oder - durch Erhöhung der Laserleistung - ebenfalls breite Linien und damit eine erhöhte Baurate erreicht werden sollen (die Linien werden bei Erhöhung der Laserleistung breiter, weil die Verfestigungsbedingungen in einem breiteren Raumbereich erfüllt sind (Schwellwertprozess)).

Die meisten Objektive haben nur in einem bestimmten Fokalbereich die besten Abbildungseigenschaften. Sofern sie aus der Mikroskopie kommen, liegt dieser meist an der Unterseite des Deckgläschens (entsprechend der Innenseite der Badbehälterwand). Jede Abweichung von diesem Punkt führt zu Abbildungsfehlern und damit zu einem Ausschmieren des Brennpunkts im Raum. Erfindungsgemäß ist es daher bevorzugt, den Abstand des Objektivs vom Bad und damit die Lage der Fokussierebene so zu wählen, dass möglichst wenig zu verfestigendes Badmaterial durchlaufen werden muss. Hinsichtlich der erfindungsgemäßen Ausführungsform der Belichtung von unten (oder ggf. von der Seite) ergeben sich daher insbesondere die Vorteile, dass sich während der Strukturierung die Bedingungen für die Ausbildung des Fokalbereichs nicht ändern, weil es der Träger ist, der in Z-Richtung bewegt wird, und nicht die Optik, und dass nahe an den optimalen, vom Hersteller der Optik vorgegebenen Bedingungen gearbeitet werden kann.

Erfindungsgemäß kann mit jeder beliebigen Art von Objektiven gearbeitet werden, d.h. solchen mit und ohne Immersion.

Es können Strukturen mit einer Größe bis in den cm-Bereich oder darüber hinaus hergestellt werden. Nach der Erfindung wird die Fokussieroptik in das Material eingetaucht und kann dort in entsprechender Weise ohne Einschränkung positioniert werden oder es kann eine Trägereinheit, an der sich das Material bei seiner Verfestigung abscheidet, in dem Materialbad beliebig positioniert werden. Eine Kombination dieser beiden Alternativen liegt ebenfalls im Bereich der Erfindung. Mit dieser ist die hochflexible Erzeugung dreidimensionaler Strukturen mit Größen bis in den Zentimeterbereich möglich. Im ersten Fall kann die Fokuslage im zu verfestigenden Material ohne Einschränkung durch Eintauchen und Positionieren der Fokussieroptik ausgewählt werden. Im zweiten Fall ist zwar die Fokuslage relativ zum Materialbehälter und damit zum zu verfestigenden Material und damit der Ort der Materialverfestigung im Materialbad in der Regel eingeschränkt, meist auf zwei Dimensionen, jedoch ist über die Trägereinheit bereits verfestigtes Material relativ zur Fokuslage positionierbar, so dass durch eine entsprechende Positionierung bereits verfestigten Materials Strukturen nahezu beliebiger Größe erzeugt werden können.

Da die Laserstrahlung immer durch eine definierte Grenzfläche, also eine transparente, optische Oberfläche, in das zu verfestigende Material eingebracht wird, werden optische Fehler sehr gering gehalten. Eine Verfestigung kann mit einer sehr hohen Genauigkeit erfolgen und zwar unabhängig von der Menge des zu verfestigenden Materials sowie der Größe des Materialbades. Die erzielbare Auflösung, die hauptsächlich durch die Brennweite, Fokussieroptik und einen Schwellwertprozess im Material bestimmt wird, ist sehr hoch und wird durch optische Fehler bei der Einleitung der Strahlung in das Material nicht verschlechtert. Der Materialbehälter ist vorzugsweise eine Wanne entsprechender Größe, in der das zu verfestigende Material in Form eines Bades vorliegt. Es können nahezu beliebig große Materialbäder verwendet werden, um den mit der Erfindung erzielten Effekt der Erzeugung hinsichtlich ihrer Größe nicht beschränkter Strukturen weiter zu unterstützen.

Die vorliegende Erfindung eignet sich insbesondere zur schnellen Herstellung von spezifisch und beliebig geformten Funktionselementen auf beliebig geformten, beispielsweise planaren oder zylindrischen Substraten. Dazu gehören z.B. optische Elemente für Anwendungen im Bereich der (Bio)-Photonik und Antireflexschichten. Auch die parallele Herstellung von photonischen Kristallen für künftige photonische Schaltkreise und Bauelemente ist möglich. Außerdem können die mit der Vorrichtung erzeugten Strukturen in der Mikromechanik (als MEMS oder MOEMS) und der Mikro- und Nanoelektronik, sowie in Quantenbauelementen und der Polymerelektronik eingesetzt werden. Darüber hinaus ist ein Einsatz des Strukturierungsdevices im Life-Science-Bereich, z.B. in der Orthopädie (u. a. Prothetik), der regenerativen Medizin (z. B. als Trägerstrukturen) und in der Pharmazie (u. a. als Drug-Delivery-Systeme) möglich.

Ein zu verfestigendes Material im Sinne der Erfindung ist ein organisches Material oder ein anorganisch-organisches Hybridmaterial, insbesondere ein organopolysiloxanhaltiges Material, das sich jeweils photochemisch verfestigen lässt. Das zu verfestigende Material kann insbesondere ein beispielsweise mit Nano- oder Mikropartikeln gefülltes oder ein ungefülltes Material sein. Gefüllte Materialien weisen bestimmte unter Umständen ungebundene Additiv-Materialien auf, die dem Material bestimmte gewünschte Eigenschaften verleihen können.

Das zu verfestigende Badmaterial kann entweder lösemittelfrei oder lösemittelhaltig verarbeitet werden. Für den letzteren Fall ist die Art des verwendeten Lösungsmittels nicht kritisch; günstig sind jedoch nichttoxische Lösemittel, und zwar beispielsweise dann, wenn die zu erzeugenden Strukturen in der Medizin oder verwandten Gebieten eingesetzt werden sollen. Wird kein Lösemittel verwendet, kann das Badmaterial je nach eingesetztem Polysiloxan, das ja meist durch Polykondensation eines oder mehrerer organisch polymerisierbarer Silane entstanden ist, eine sehr hohe Viskosität besitzen. In diesen Fällen ist der Einsatz einer Optik bevorzugt, die sich außerhalb des Bades befindet.

Das Arbeiten mit einem lösemittelfreien Badmaterial hat eine Reihe von Vorteilen. So enthalten die damit hergestellten Strukturen keine kleinmolekularen, möglicherweise toxischen oder sonstwie bedenklichen Verbindungen.

Soll der fertig verfestigte Formkörper vom Substrat getrennt werden, kann letzteres ggf. in bekannter Weise derart (durch monomolekulare oder dickere Schichten) funktionalisiert sein, dass die Ablösung während des Entwicklungsprozesses durch Lösemittelentfernung oder durch "Abheben" des Struktur mittels einer speziell angeordneten Vorrichtung (z.B. eines Messers) möglich ist. Auch kann eine Opferschicht auf das Substrat aufgebracht werden, auf der der verfestigte Formkörper gut haftet, sich aber im Entwicklungsprozess (dem Befreien von anhaftendem Badmaterial) auflöst, so dass sich die erzeugte Struktur vom Substrat abhebt.

Das Herausnehmen der erzeugten Körpers kann in einfacher Weise dadurch erfolgen, dass diese aus dem Bad herausgehoben werden, beispielsweise indem der Träger aus dem Bad gefahren wird. Sie werden sodann ggf. mit einem geeigneten Lösungsmittel gespült, um anhaftendes Badmaterial zu entfernen, und an der Luft oder auf andere Weise (z.B. in Schutzgasatmosphäre) getrocknet.

Mit der Erfindung ist es möglich, dreidimensionale Körper beliebiger Form aus zu verfestigenden Materialen durch lichtinduzierte Vernetzungsprozesse über einen weiten Wellenlängenbereich unter Verwendung verschiedenster Laser- und optischer Systeme in situ herzustellen. Es kann generell eine Vielzahl an Material- und Stoffklassen parallel und großflächig bearbeitet werden.

Zur gezielten Verfestigung wird eine Zwei- oder Mehrphotonenpolymerisation (2PP/nPP) eingesetzt. Dabei wird ein fokussierter Laserpuls oder eine Folge fokussierter Laserpulse gezielt auf ein adressiertes Volumenelement im zu verfestigenden Material gerichtet. Unter einer Laserpulsfolge oder Folge von Laserpulsen ist eine Anzahl zeitlich aufeinander folgender Einzellaserpulse zu verstehen, die zur Verfestigung einer Struktureinheit (Voxel) eingesetzt werden. Die Anzahl der Pulse beträgt wenigstens zwei, bevorzugt 100 bis 1000 oder mehrere 100 bis mehrere 1000. Durch den Laserpuls bzw. die Laserpulsfolge kommt es an den Stellen zu verfestigender Volumenelemente im Brennpunkt zu Zwei-(TPA) oder Mehrphotonenabsorption, wodurch ähnliche chemische Veränderungen wie bei der Benutzung von deutlich kürzeren Wellenlängen induziert werden können. Eine Materialveränderung kann auf diese Weise sehr gezielt im dreidimensionalen Raum ausgelöst werden. Mit besonderem Vorteil werden Laserpulse einer Dauer im Femtosekundenbereich verwendet. Die verwendete Strahlung weist mit Vorteil eine Wellenlänge auf, die unter normalen Umständen, in denen die Energie eines Photons nicht zu einer Anregung von Atomen oder Molekülen ausreicht, im Reaktivmaterial nicht absorbiert wird. Im Gegensatz zu anderen Strukturierungsverfahren, wie z.B. dem klassischen Rapid Prototyping mit Abstreifer und Überschichtung, bietet die vorliegende Erfindung den Vorteil, dass dreidimensionale Strukturen in einem Schritt mit wenig Materialaufwand und in sehr kurzer Zeit hergestellt werden können, wobei die Strukturen bei nahezu beliebiger Größe mit hoher Präzision erzeugt werden können.

Je nach verwendeter Optik und Material können Struktureinheiten (Voxel) von weniger als 100 nm bis hin zu 100 µm erzeugt werden. Durch Anpassung der Laserintensität können theoretisch infinitesimal kleine Volumenelemente kreiert werden. Durch eine Kombination aus refraktiver und diffraktiver Optik kann der optische Weg der Laserpulse durch die Optik bzw. das Linsenglas kurz gehalten und können Abbildungsfehler reduziert werden. Die erzeugten Voxel können sich mehr oder weniger überlappen und bilden in ihrer Gesamtheit die herzustellende ein- bis dreidimensionale Struktur. Je nach Größe der erzeugten Voxel ist es möglich, die Struktur mit einer beliebig skalierbaren Porosität zu versehen. Dieses ist insbesondere zur Erzeugung von Gerüststrukturen zur Anregung von Zellwachstum "Scaffolds" von Bedeutung. Solche Gerüststrukturen können mit Vorteil eine Porenstruktur im Bereich von 10 nm bis 10 mm, bevorzugt von 1 µm bis 5 mm besitzen. Die hergestellten Strukturen können außerdem unporös sein, wie z. B. in Form von Nanostrukturen.

Die Positionierung ist zu Beginn derart, dass der Fokus bzw. die Foki nahe der Trägereinheit oder an diese angrenzend positioniert sind oder werden. Anfänglich verfestigtes Material lagert sich im Rahmen seiner Verfestigung an der Trägereinheit an und wird zusammen mit dieser im weiteren Verlauf der Strukturierung oder Verfestigung relativ zum Fokus bzw. den Foki positioniert. Die weitere Positionierung ist derart, dass sich Material an bereits verfestigtem Material oder der Trägereinheit anlagert.

Wenn die Laserstrahlung durch den Materialbehälter in das zu verfestigende Material geleitet wird, dient dieser selbst der Ausbildung einer definierten Grenzschicht, an der die Laserstrahlung in das zu verfestigende Material eintritt. Aufgrund der in dem Materialbehälter gegenüber diesem positionierbaren Trägereinheit wirkt der Arbeitsabstand der verwendeten Optik, durch den der Abstand des Verfestigungsbereichs von einer Wandung oder dem Boden des Materialbehälters bestimmt wird, nicht begrenzend.

Bei einer Einleitung von Laserstrahlung durch die Wandung oder den Boden des Materialbehälters hindurch ist es von besonderem Vorteil, dass es nicht zu einem Kontakt zwischen Optik und zu verfestigendem Material kommt. Hierdurch ist ein schnelles Verfahren und Positionieren der Optik möglich. Es werden keine Turbulenzen im Material erzeugt und es besteht ein geringerer Widerstand als bei der Positionierung einer eingetauchten Optik. Des Weiteren muss die Optik nicht gegenüber dem zu verfestigenden Material abgedichtet sein. Da Kontakt zwischen der Optik und dem zu verfestigenden Material nicht zustande kommt, können auch aggressive Materialien, die die Optik beschädigen würden, verarbeitet werden.

Im Falle einer in das Material eintauchbaren Fokussieroptik bildet diese selbst eine definierte optische Grenzfläche für den in das zu verfestigende Material eintretenden Laserstrahl aus. Anders als bei der vorgenannten Ausführungsform kann die Verfestigung an jeder beliebigen Stelle im Materialbad erfolgen, ohne dass eine zusätzliche positionierbare Trägereinheit verwendet werden muss, da die Optik in gewünschter Weise im Materialbad positioniert sowie nahezu beliebig tief eingetaucht werden kann und der Ort der Verfestigung nicht durch den Arbeitsabstand der Optik beschränkt ist.

In einer Ausgestaltungsform weist eine erfindungsgemäße Vorrichtung eine Optik zur räumlichen Aufteilung des Laserstrahls und Erzeugung wenigstens zweier räumlich voneinander beabstandeter Laserfoki oder Intensitätsmaxima auf, was im Nachfolgenden als Parallelisierung bezeichnet wird. Hierdurch kann die Strahlungsenergie des Lasers räumlich gleichzeitig auf zwei oder mehrere Voxel gerichtet werden, so dass eine Verfestigung gleichzeitig an zwei oder mehreren Stellen auftritt. Relativ große Strukturen und Formkörper können so in kurzer Zeit erzeugt werden. Bei gleichzeitiger Erzeugung von n Voxeln lässt sich damit die Produktionszeit der herzustellenden Strukturen abhängig vom zu produzierenden Element um den Faktor n beschleunigen. Dieser Faktor n entspricht der Anzahl der durch Strahlaufteilung erzeugten Intensitätsmaxima bzw. Laserfoki, durch die eine Mehrphotonenpolymerisation hervorgerufen wird.

Bei Parallelisierung ermöglicht die Erfindung nicht nur eine parallele Erzeugung von Voxeln eines einzigen Funktionselements, sondern auch eine parallele Erzeugung zweier oder mehrerer Funktionselemente. Eine einzelne Struktur kann gleichzeitig über mehrere Brennpunkte oder mehrere Strukturen können gleichzeitig über jeweils einen oder mehrere Brennpunkt erzeugt werden. Dabei können eine oder mehrere Optiken verwendet werden, um n Foki zu erzeugen. Es ist möglich, mehrere Strukturen auf demselben Substrat zu fertigen, als auch für jede Struktur ein eigenes Substrat zu wählen.

Die Parallelisierung kann weiterhin durch Strahlformung oder Aufteilen eines Laserstrahls in mehrere Teilstrahlen erfolgen, die dann jeweils fokussiert werden und im Material an mehreren Stellen gleichzeitig Voxel verfestigen. Hierfür kann beispielsweise eine Amplitudenmaske verwendet werden, die in den Strahlengang gebracht wird und im Fernfeld des Strahls ein Beugungsmuster erzeugt. Daneben kann ein Mikrolinsenarray, eine Axikon Linse beispielsweise zur Erzeugung einer ringförmigen Brennebene oder ein elektrisch ansteuerbarer räumlicher Lichtmodulator als dynamisch variable Phasenmaske eingesetzt werden, der eine gezielte Verteilung der Lichtintensität in mehrere Brennpunkte und somit eine Teil-Parallelisierung des Strukturierungsprozesses bewirkt. Zusätzlich können die Brennpunkte durch gezielte dynamische Modulation der Phase im Raum bewegt werden, wodurch auf mechanische Verschiebeeinheiten verzichtet werden kann.

Die erfindungsgemäße Vorrichtung weist ein Positionierungssystem auf, mit dem der Laserfokus bzw. die Laserfoki im Materialbad positioniert werden können. Die Positionierung erfolgt durch eine Bewegung der Fokussieroptik, ggf. ergänzt durch eine Bewegung einer im Bad angeordneten Trägereinheit. Sie kann in Form linearer und/oder rotatorischer Positionierung in und/oder um eine, zwei, drei oder mehr Achsen erfolgen. Insbesondere kann eine Trägereinheit für verfestigtes Material relativ zum Laserfokus bewegbar, insbesondere linear verschiebbar und/oder drehbar sein. Weil der Materialbehälter nicht bewegt werden muss, müssen nur relativ geringe Massen beschleunigt und abgebremst werden, was eine hochgenaue Positionierung erleichtert. Die Trägereinheit kann in allen Ausführungsformen der Erfindung ggf. auch in mehr als einer, z.B. in zwei oder in allen drei Raumrichtrungen bewegbar sein.

In jedem Fall erfolgt eine Positionierung durch Bewegen der Optik. Diese kann in einer Raumrichtung bewegbar sein, z.B. in Y-Richtung wenn der Träger im Materialbad mindestens in X- und in Z-Richtung bewegbar ist. Bevorzugt ist die Fokussieroptik jedoch in mindestens zwei Raumrichtungen bewegbar, z.B. in X- und Y-Richtung, während der Träger mindestens in Z-Richtung bewegt werden kann. Wenn die Fokussieroptik in alle drei Raumrichtungen bewegt werden kann, was sich vor allem bei einer eingetauchten Fokussieroptik anbietet, kann auf einen Träger im Materialbad ganz verzichtet werden, oder aber dieser Träger kann starr im Bad angeordnet sein.

Ebenso kann die Position des wenigstens einen Brennpunkts relativ zum zu verfestigenden Material frei gewählt werden. Es können damit verschiedene Startpunkte zur Materialmodifikation adressiert werden. Im Falle mehrerer Laserfoki ist eine Brennebene für alle Brennpunkte festgelegt, deren Position oder Lage im zu verfestigenden Material adressiert werden kann. Bei Verwenden eines aktiven, dynamischen Raumlichtmodulators kann jedoch grundsätzlich auch die relative Position der Brennpunkte zueinander dynamisch variiert werden. Soll ein bestimmter Punkt im Material in einem Fokusbereich zur Verfestigung gebracht werden, so kann dessen Lage bei bekannter Substratoberfläche (Trägeroberfläche) z.B. über eine Software korrigiert werden, während bei unbekannter Oberflächentextur die Daten eines optischen Detektionssystems beispielsweise in Form eines 3D-Scanners verwendet werden können. Dazu Folgendes:
Wichtig bei der (Mehr-Photonen-) Strukturierung von flüssigen Materialien ist die Aushärtung des flüssigen Materials direkt an der Oberfläche des Substrats. Hierfür wird ein Ankerpunkt benötigt, so dass das jeweils nächste zu verfestigende Volumenelement (Voxel) mit einem bereits verfestigten Bereich oder eben dem Substrat Kontakt hat. Wenn das nicht der Fall ist, können bereits verfestigte Bereiche im flüssigen Harz von ihrer Sollposition wegdriften, was die Strukturqualität beeinträchtigt. Dies kann zu einer defekten Struktur führen. Wenn der Ankerpunkt auf dem Substrat nicht korrekt gefunden wurde, kann es passieren, dass zwar die Struktur korrekt generiert wurde, aber man sie letztendlich nicht wiederfindet, weil sie beim Entwickeln nicht mehr am Substrat haftet und nicht mehr aufzufinden ist. Bevorzugte Ausführungsformen der Erfindung betreffen daher die Auffindung eines solchen Ankerpunkts (oder ggf. auch mehrerer solcher Ankerpunkte).

In einer ersten diesbezüglichen Ausgestaltung wird dieser Ankerpunkt mit Hilfe einer im System installierten Mikroskop-Kamera detektiert. Diese ist auf die zu strukturierende Fläche gerichtet; es lässt sich mit ihr neben den entstehenden Strukturen auch der Laserspot beobachten. Wenn dieser im Kamerabild am kleinsten ist (beim Verfahren in Z-Richtung), wird das Substrat optimal getroffen.

In einer zweiten diesbezüglichen Ausgestaltung kann der Ankerpunkt automatisch gefunden werden. Dazu wird die bereits in Bad eingebrachte Probe bzw. das Substrat in-situ mit einem Detektionssystem (beliebiger Art) vermessen. Die Daten über die Substratoberfläche, die so gewonnen werden, werden dazu benutzt, entweder beim Schreiben von mehreren Strukturen auf einem Substrat den Ankerpunkt für jede Struktur individuell festzulegen, oder beim Schreiben einer einzelnen (großen) Struktur deren Geometrie derart anzupassen, dass sie möglichst immer eine definierte Orientierung zur Substratoberfläche hat.

Besonders vorteilhaft ist die Erfassung eines kompletten Topographiebildes mit einem Sensor, der dies in einer "Ein-Schuss"-Messung macht. Alternativ lässt man einen Einzelpunktsensor, also einen Sensor, der immer nur einen Punkt in der X-Y-Ebene vermessen kann, über die Substratoberfläche rastern und so das Topographiebild erzeugen.

Mit Hilfe dieser Maßnahmen lässt sich in beiden Fällen erstens immer der richtige Ankerpunkt auffinden, und zwar auch bei dem häufigsten Fall eines leicht verkippten Substrats, natürlich auch im Falle eines verbogenen Substrats. Zweitens kann auch auf bereits strukturierten Oberflächen eine erneute Strukturierung erfolgen. So kann man zum Beispiel auf zuvor strukturierte Linsen zusätzliche Strukturen aufbringen.

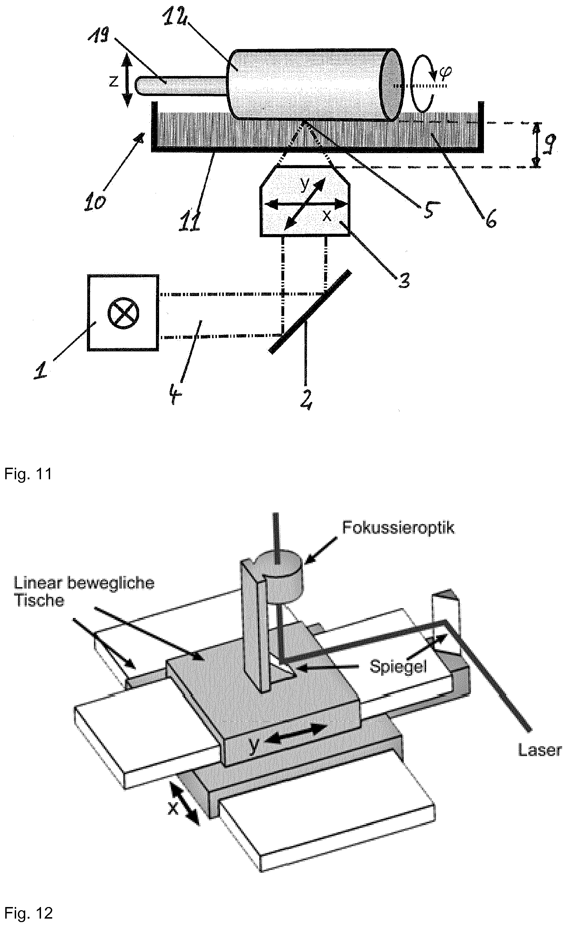

Ein Einzelpunktsensor wird nachstehend beispielhaft näher erläutert. Es wird ein Spannungssignal generiert, das abhängig von der Position des Fokalbereiches relativ zum Substrat bzw. dem Soll-Ankerpunkt ist. Dieses sollte beim Treffen des Ankerpunktes mit dem Fokus ein bestimmtes Niveau erreichen, vorzugsweise ein Maximum. Dies kann z.B. durch die Methode des Rückreflexes im Strahlengang bewerkstelligt werden, wie aus Fig. 12 ersichtlich. Vor dem Einbringen des Strukturierungslasers bzw. der Pulse durchlaufen diese z.B. ein Glasplättchen, das zunächst einmal für die Ausbreitung dieser Pulse nicht relevant ist. Die Strahlung wird dann wie üblich ins Material hinein fokussiert. Abhängig von der Z-Position wird ein geringer Teil der Pulse zurückreflektiert, weil es zwischen Substrat und flüssigem Resistmaterial einen Brechungsindexkontrast gibt. Diese Reflexion ist maximal, wenn die Grenzfläche Substrat/Resist optimal getroffen wird. Sodann wird die Rückreflexion mit dem Glasplättchen abgegriffen, welches einen Teil davon auf eine Photodiode ablenkt.

In einer Variante lässt sich so ein Topographiebild erhalten, nämlich dann, wenn man dieses Maximieren des Rückreflexes an vielen Punkten auf dem Substrat wiederholt und die Z-Positionen speichert, an denen die Maxima auftreten. Für die Rückreflexmethode kann ggf. der für die Strukturierung benutzte Laser als Strahlungsquelle verwendet werden. Hierbei wird dessen Leistung vorteilhaft sehr gering eingestellt, um die Gefahr auszuschalten, mit dem für die Rückreflexion vorgesehenen Lichtstrahl eine ungewollte Verfestigung von Badmaterial zu bewirken. Günstiger kann es allerdings sein, einen zweiten Laser zu verwenden, der nicht mit dem Resist wechselwirkt und im selben Punkt fokussiert wird wie der Strukturierungslaser. In einer anderen Variante lässt sich mittels Regelung auch dafür sorgen, dass immer ein bestimmtes Signallevel des Rückreflexes durch Kompensieren der Z-Position gehalten wird, während der Fokus in der Ebene bewegt wird. Dafür bieten sich bekannte Regelungen wie PI oder PID an.

Weil erfindungsgemäß der Brennpunkt relativ zum Substrat in der XY-Ebene bewegt wird und sich damit die Fokuslage in Z relativ zum Substrat und damit das Signal des Rückreflexes ändert, muss die Differenz von Soll-Wert (dem Spannungssignal im Maximum) zum (dynamischen) Ist-Wert geregelt werden. Dazu werden mathematische Rechnungen ausgeführt, um ein Signal an das Regelglied (die Z-Achse) zu übermitteln, welches den Ist-Wert dem Sollwert nähert. Der Fachmann ist in der Lage, diese Rechnungen (meist Proportional- (P), Integral- (I) und Differentialoperationen (D)) durchzuführen und die Parameter so auszuwählen, dass eine akkurate Anpassung des Ist- an den Sollwert erfolgt.

Ein PI-Regler kombiniert den Vorteil des P-Reglers, nämlich schnelle Reaktion, mit dem Vorteil des I-Reglers, der exakten Ausregelung. Ein PI-geregelter Kreis ist daher genau und mittelschnell. Ein PID Regler vereinigt die guten Eigenschaften aller drei Reglertypen. Der PIDgeregelte Kreis ist genau und sehr schnell. Für die Erfindung ist deshalb ein PID-Regler gut geeignet.

Die Positionierungsgenauigkeit wenigstens einer oder jeder Bewegungsachse beträgt vorzugsweise wenigstens 0,20 µm. Durch Verwendung von Positionierungssystemen in Form von hochpräzisen Lineartischen, beispielsweise luftgelagerten oder mit Piezo-Technik bewegbaren Tischen, mit großen Verfahrwegen sowie optional von großen Substraten oder Materialbädern (z.B. 62cm x 62cm) können sowohl kleine Strukturen mit Abmessungen von unter einem Millimeter als auch makroskopische Körper mit mehreren Zentimetern Kantenlänge erzeugt werden.

Nach einer besonders vorteilhaften Ausführungsform kann anstelle oder zusätzlich zur linearen Positionierung in den Ebenen des Raumes eine Positionierungseinrichtung mit wenigsten einer rotierbaren Achse verwendet werden. Hierdurch kann entweder das zu verfestigende Material oder eine in diese eingetauchte Trägereinheit um wenigstens eine Raumachse gedreht werden. Es können Substrate in Form aufgerollter Folien oder ähnlichem genutzt werden, die dann als Trägereinheit fungieren oder mittels einer solchen positioniert werden. Die folienartigen Substrate können über die Rotationspositionierung geführt und relativ zu dem wenigstens einen Laserfokus positioniert werden. Die Rotationspositionierung erfolgt vorzugsweise mit einer Auflösung von wenigstens 0.079 Bogensekunden und/oder einer Genauigkeit von wenigstens 3 Mikrobogensekunden. Die maximale Rotationsgeschwindigkeit beträgt vorzugsweise ca. 300 Umdrehungen pro Minute bei einer Wiederholbarkeit von weniger als 2 Bogensekunden.

Mit besonderem Vorteil weist das Positionierungssystem die folgenden Eigenschaften auf: der Verfahrweg vorzugsweise in jede Richtung beträgt vorzugsweise mindestens 150 mm, insbesondere in jede Raumrichtung. Die Positionierungsgenauigkeit beträgt in jeder Richtung vorzugsweise ±0.20 µm. Die Genauigkeit bei der wiederholten Anfahrt eines Punktes beträgt ±0.05 µm. Die Genauigkeit senkrecht zur Bewegungsrichtung in horizontaler Ebene beträgt insbesondere ±0.25 µm und die Genauigkeit senkrecht zur Bewegungsrichtung in der vertikalen Ebene ±0.25 µm. Die Verfahrgeschwindigkeit des Positionierungssystems beträgt bis zu 300 mm/s (es sind auch niedrigere Geschwindigkeiten möglich), bei einer maximalen linearen Beschleunigung bei Lastfreiheit von ca. 10 m/s².

Als Strahlquelle können grundsätzlich Festkörperlaser, Dioden-gepumpte Festkörperlaser, Halbleiterlaser, Faserlaser, etc. beliebiger Wellenlänge verwendet werden. Mit besonderem Vorteil wird in einer Ausführungsform der Erfindung ein Ytterbium Lasersystem verwendet. Dessen Wellenlänge befindet sich bei Frequenzverdopplung im Bereich von grünem Licht. Vorteil von Ytterbium Lasern gegenüber Ti-Saphir-Lasersystemen, die eine Wellenlänge von ca. 800nm besitzen, ist die Wellenlänge von 1030nm. Diese liegt bei Frequenzverdoppelung im grünen Bereich bei 515nm, was zu einer verbesserten Auflösung führen kann. Außerdem können die zu strukturierbaren Materialien effizienter bearbeitet werden als mit Lasern in Wellenlängenbereichen von ca. 800 nm. Das Prozessfenster ist hinsichtlich Materialformulierungen deutlich größer. Ein Ti-Saphir-Laser liegt bei Frequenzverdopplung mit Nachteil im UV-Bereich bei ca. 400nm. Dieser Spektralbereich ist allerdings so energiereich, dass bei einer Belichtung der meisten zu verfestigenden Materialsysteme bereits ein 1PP-Prozess stattfinden würde, was durch Verwendung von Lasersystemen mit größerer Wellenlänge vermieden werden kann. Ein weiterer Nachteil von Ti-Saphir Lasern ist, das die Laserpulse meist von zu kurzer Dauer sind. Hierdurch würde zwar eine höhere Prozesseffizienz erzielt, es entstehen aber auch Probleme, weil kurze Pulse ein sehr breites Spektrum haben und eher Abbildungsfehler entstehen. Generell sind kurze Pulse schwerer handhabbar, was zu höherem Kosten- und Zeitaufwand führen kann.

Schließlich ist eine Verwendung von Ytterbium Lasersystemen grundsätzlich möglich. Vorteilhaft ist, dass man diese Laser mit Dioden pumpen kann und keinen zusätzlichen Pumplaser und diverse andere Instrumente notwendig sind. Vorteil von Ytterbium Lasern gegenüber Nd:YAG-Lasern allerdings sind relativ kurze Pulse. Während Ytterbium-Laser Pulse weit unter einer Pikosekunde erzielen können, sind die Pulslängen eines Nd:YAG-Lasers in der Regel größer als eine Pikosekunde und somit zum Auslösen einer nicht linearen Absorption eher ungünstig, da die Gefahr von schwach vernetzten und labilen Strukturen besteht, was zu den zuvor beschriebenen Nachteilen führen kann.

Die erforderlichen Pulsdauern zum effizienten Auslösen einer nicht-linearen Absorption sind kleiner als eine Pikosekunde. Zur Verbesserung von Licht-Materie Wechselwirkungen und zur effizienteren Anregung der Polymerisation können zusätzlich Photoinitiatoren verwendet werden. Die Repetitionsrate ist vorzugsweise zwischen 1 kHz und 80 MHz, bevorzugt zwischen 10 kHZ und 80 MHz einstellbar. In Abstimmung mit dem gegebenen Materialsystem können Wellenlängen im UV-Bereich, im sichtbaren Bereich sowie im Infrarotbereich verwendet werden. Die Laser können insbesondere Leistungen zwischen 100 mW und 5 W, bevorzugt zwischen 150 mW und 2 W und/oder eine Pulsdauer von unter 1 Pikosekunde und/oder eine Repetitionsrate zwischen 1 bis 80 MHz aufweisen.

Bei der erfindungsgemäßen Vorrichtung kann die Aufteilung des Laserstrahls bzw. die räumliche Strahlformung auf unterschiedliche Weise erfolgen. Sie kann durch Einsatz passiver DOE's (Diffraktive Optische Elemente), wie zum Beispiel Phasen oder Amplitudenmasken, oder Mikrolinsenarrays oder aktiver, vorzugsweise dynamisch anpassbarer DOE's sowie Kombinationen dieser Elemente bewirkt werden. Es können somit beliebige Intensitätsverteilungen, wie zum Beispiel mehrere Brennpunkte oder beliebig geformte Brennpunkte erzeugt werden, die das Schreiben von je einer Struktur mit mehreren ggf. geformten Brennpunkten erlauben. Besonders vorteilhaft sind DOE's zur Phasenmodulation, da diese im Vergleich zu DOE's mit Amplitudenmasken keine oder nur geringe Leistungsverluste aufweisen. Eine Verwendung von aktiven (transmittiven oder reflektiven) räumlichen Lichtmodulatoren ist außerdem möglich. Als Maske kann mit Vorteil ein eindimensionales Gitter mit einem Gitterabstand von vorzugsweise weniger als 10 µm oder ein zweidimensionales Array mit einem Pixelabstand von vorzugsweise weniger als 10 µm verwendet werden.

Es können außerdem mehrere Fokussieroptiken Verwendung finden. Diese können dann relativ zum Trägermaterial (Substrat) bewegt werden, so dass gleichzeitig mehrere Strukturen mit jeweils einem Brennpunkt geschrieben werden können. Die Verwendung mehrerer Fokussieroptiken erfordert die Aufteilung der Laserleistung durch konventionelle Strahlteiler in mehrere Strahlen, die jeweils zu einer Fokussieroptik geführt werden. Schließlich ist eine Kombination der vorstehenden Strahlformungen möglich, indem zunächst ein Modulator die gewünschte Intensitätsverteilung der Strahlung erzeugt und diese anschließend durch mehrere Optiken fokussiert wird. Gleichfalls können auch jeweils ein Modulator bzw. eine Maske pro Fokussieroptik verwendet werden. Diese Variante ermöglicht, dass gleichzeitig mehrere Strukturen mit jeweils mehreren Brennpunkten geschrieben werden können.

Jede Fokussieroptik kann gegenüber anderen Elementen der Strahlführung und/oder dem Materialbehälter und/oder dem zu verfestigenden Material und/oder der Trägereinheit bewegbar sein, so dass zur Positionierung lediglich die Fokussieroptik allein bewegt werden muss und verbleibende Elemente der Strahlführung fest installiert sein können. Insbesondere im Falle einer Positionierung über eine Bewegung der Optik kann die Laserstrahlung mit besonderem Vorteil wenigstens in Teilbereichen der Strahlführung über Lichtwellenleiter geführt werden.

Zur Vermeidung von Abbildungsfehlern beim Fokussieren können nach der Erfindung Hybridoptiken aus diffraktiven optischen Elementen und konventionellen Linsen eingesetzt werden. Die diffraktiven optischen Elemente sind beispielsweise aus Quarzglas, organopolysiloxanhaltigen Materialien, Flüssigkeiten oder beliebigen Materialkombinationen hergestellt. Bei der Verwendung von Fokussieroptiken, welche ohne Brechungsindexanpassung eingesetzt werden, erhält man bei variablen Eindringtiefen des Lichtes in das Material einen Positionierungsfehler, der auf Grund von Brechung an der Grenzfläche Luft-Material (d.h. die Bewegung des Brennpunkts stimmt nicht mit der Bewegung der Optik überein) entsteht. Diese Abweichung in der Z-Positionierung des Brennpunktes kann über einen Korrekturfaktor, z. B. über eine Maschinensoftware, kompensiert werden.

Die Vorrichtung und das Verfahren der vorliegenden Erfindung sind mit Vorteil nicht durch Beugungsbegrenzungen der Fokussieroptiken beschränkt, weil zum einen ein anderes Absorptionsverhalten als bei linearer Ein-Photonen-Absorption vorliegt und zum anderen ein Schwellwertprozess ausgenutzt wird. Das Absorptionsprofil (näherungsweise Gauß-Profil) bei Mehrphotonenabsorption ist weiterhin schmaler, wodurch eine bessere Auflösung möglich ist, da ein nichtlinearer Zusammenhang zwischen der Photonendichte und dem Absorptionsverhalten besteht. Während sich das Absorptionsverhalten der Ein-Photonen-Absorption durch Linearität gegenüber der Photonendichte auszeichnet und durch klassische Physik erklärbar ist, findet die simultane Absorption zweier oder mehrerer Photonen ihre Begründung in der Quantenmechanik. Hier lässt sich zeigen, dass bei sehr hohen Spitzenintensitäten (Photonendichten) die Wahrscheinlichkeit für Multi-Photon-Übergänge zunimmt. Es liegt eine nicht-lineares Verhalten gegenüber der Photonendichte vor, wodurch das Absorptionsprofil schmaler wird. Aufgrund eines Schwellwertprozesses bei den verwendeten Materialien findet eine Reaktion nur in einem Raumbereich statt, in dem die Laserintensität diesen Schwellwert überschreitet. So kann die Reaktion räumlich sehr eng begrenzt stattfinden, wodurch die Erzeugung von hochgenauen Strukturen ermöglicht wird.

Bei einer weiteren Ausführungsform der Erfindung kann die Vorrichtung ein Dispensersystem zur in-situ-Deposition des zu verfestigenden Materials aufweisen. Ein solches System ermöglicht mit Vorteil, dass zu verfestigendes Material dem Materialbad abgestimmt auf den jeweiligen Prozessstand zugefügt werden kann. Das hat insbesondere bei der Herstellung von großen Körpern oder Strukturen bis in den Milli- oder Zentimeterbereich hinein den positiven Effekt, dass zu Beginn der Herstellung nur so viel Material im Bad vorhanden sein muss, wie zur Erzeugung der ersten Voxel notwendig ist. Erst im Verlauf der weiteren Herstellung und mit Wachsen des Körpers wird über das Dispensersystem weiteres zu verfestigendes Material zugeführt, vorzugsweise immer nur in der jeweils zur Erzeugung der nächsten Voxel notwendigen Menge. Auf diese Weise ist das Bad immer nur mit der zur momentanen Erzeugung von Voxeln notwendigen Menge an zu verfestigendem Material gefüllt, was den Vorteil hat, dass bei einer Positionierbewegung des Bades nur eine verhältnismäßig geringe Masse zu bewegen ist und bei einer Positionierung über eine Bewegung einer in das Material eingetauchten Optik diese nicht tief in das Material eingetaucht bewegt werden muss, wodurch Strömungswiderstände und Verwirbelungen im Bad weitgehend verhindert werden, was die Qualität der erzeugten Körper positiv beeinflusst. Das Dispensersystem kann insbesondere frei ansprechbare Düsen aufweisen, die eine lokal definierbare Zuführung von zu verfestigendem Material ermöglichen, wodurch es aufgrund Materialeinsparung zu einer erheblichen Kostenreduktion und Ressourcenschonung bei der Herstellung von Funktionselementen kommt. Das Dispensersystem verfügt vorzugsweise über eine hohe Positionierungsgenauigkeit im Mikrometerbereich. Die zuvor beschriebene Verfahrensführung ist grundsätzlich auch ohne Verwendung eines Dispensersystems manuell möglich.

Nach einem weiteren Vorschlag kann die Vorrichtung ein Scannersystem aufweisen, insbesondere einen 3D-Scanner, bzw. kann bei dem Verfahren solches verwendet werden. Auf diese Weise können beliebig geformte Vorlagen oder Körper digitalisiert und die so erhaltenen Daten verwendet werden, um in einfacher Weise direkt in der Maschine komplex geformte Körper und Strukturen in das zu verfestigende Material zu schreiben. Insbesondere können mit der Vorrichtung hergestellten Strukturen als Masterstruktur für weitere Abformtechniken verwendet werden. Dabei ist sowohl ein einmalige Verwendung als auch eine vielfache Verwendung desselben Masters vorgesehen.

Weitere Merkmale und Vorteile der Erfindung ergeben sich aus der folgenden beispielhaften Beschreibung besonders bevorzugter Ausführungsformen anhand der Figuren. Dabei zeigt:
- Fig. 1: eine schematische Darstellung einer Vorrichtung nach dem Stand der Technik,
- Fig. 2 bis 4: schematische Darstellungen von erfindungsgemäßer Vorrichtungen mit Belichtung des organopolysiloxanhaltigen Materials durch einen Materialbehälter,
- Fig. 5 bis 7: schematische Darstellungen von Vorrichtungen mit Belichtung des organopolysiloxanhaltigen Materials durch eine in das Material eingetaucht Fokussieroptik,
- Fig. 8 und 9: schematische Darstellungen von Vorrichtungen unter Einsatz von Elementen zur räumlichen Strahlformung und
- Fig. 10 und 11: schematische Darstellungen von Vorrichtungen mit einem Positionierungssystem mit Rotationsachse.
- Fig. 12: eine Bewegungseinheit für die Fokussieroptik.

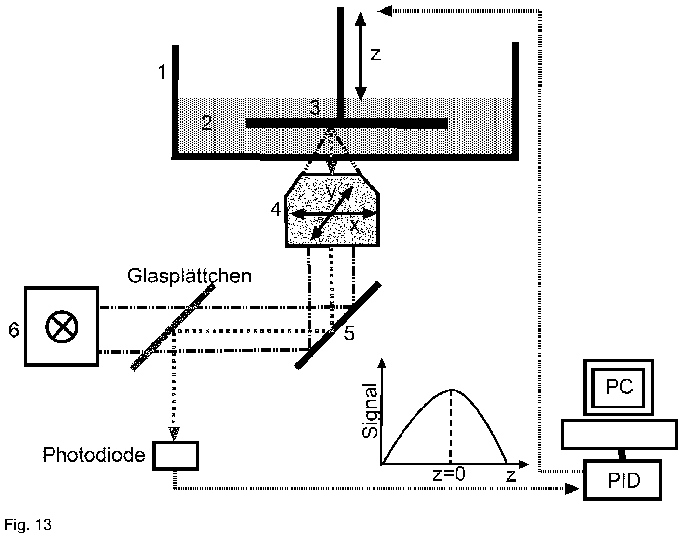

- Fig. 13: Darstellung der optischen Detektion eines Ankerpunktes.

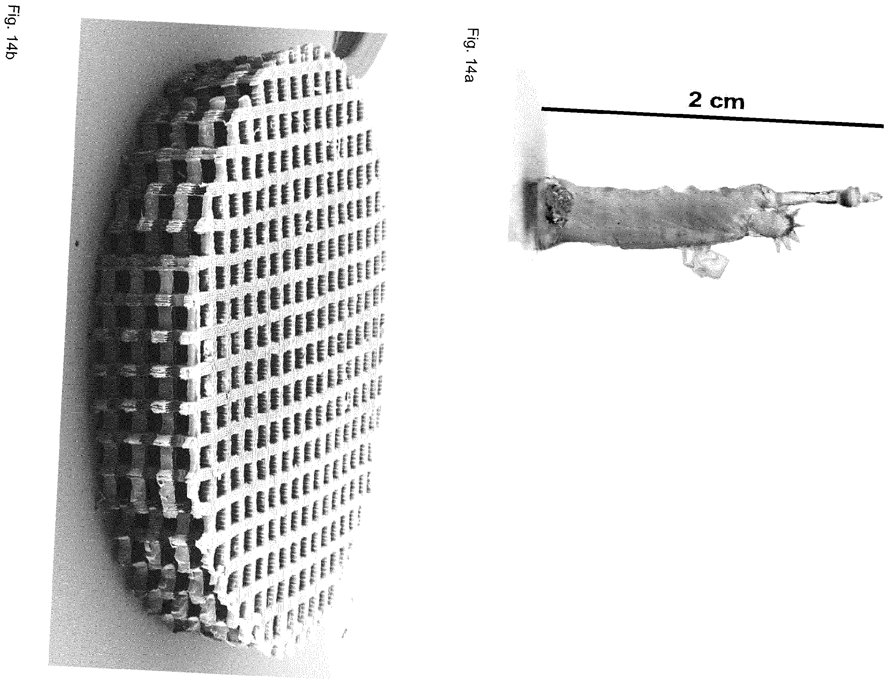

- Fig. 14a und b: Zwei erfindungsgemäß gefertigte dreidimensionale Strukturen höchst unterschiedlicher Größenordnung, von denen die letztere als "Scaffold" nutzbar ist (der Abstand von einer großen quadratischen Öffnung zur nächsten beträgt ca. 300 µm).

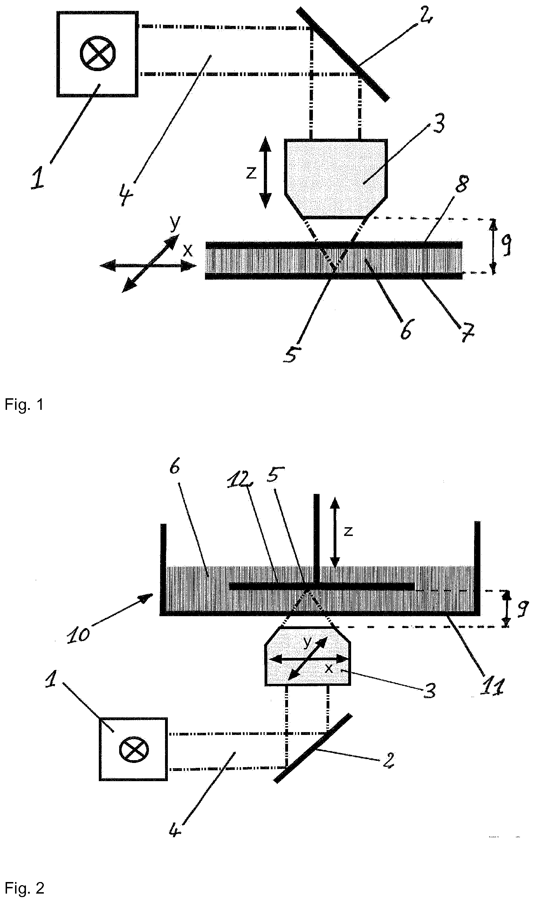

In Fig. 1 ist eine Vorrichtung zur Erläuterung der Erfindung schematisch dargestellt. Die Vorrichtung gemäß dieser Figur weist eine Laserquelle 1, einen Umlenkspiegel 2 als Bestandteil einer Strahlführung sowie eine Fokussieroptik 3 auf. Der aus der Laserquelle 1 austretende unfokussierte Laserstrahl 4 wird durch den Umlenkspiegel 2 zur Fokussieroptik 3 geleitet. Dort wird er in einen Fokus 5 fokussiert.

Unterhalb der Fokussieroptik 3 ist zu verfestigendes Material 6 zwischen einem unteren Träger 7 und einem oberen Träger 8 angeordnet. Wie in Fig. 1 schematisch angedeutet ist, ist die aus unterem Träger 7 und oberen Träger 8 bestehende Materialaufnahme mit dem zwischenliegenden zu verfestigendem Material 6 relativ zum Fokus 5 und zur Fokussieroptik 3 in X- und Y-Richtung positionierbar, während die Fokussieroptik 3 relativ zum Material 6 in Z-Richtung positionierbar ist.

Fig. 1 zeigt die Anordnung der Fokussieroptik 3 relativ zum zu verfestigenden Material 6 zu Beginn eines Verfestigungszyklus. Der Fokus 5 grenzt unmittelbar an dem unteren Träger 7 an, so dass sich im Fokusbereich verfestigtes Material an Träger 7 anlagert. Diese anfängliche Positionierung ist erforderlich, um das Material im Rahmen der weiteren Verfestigung positionierbar fixiert zu verfestigen, da ansonsten keine definierten Strukturen aufgebaut werden können. Damit diese Anfangspositionierung des Fokus angefahren werden kann, muss der Abstand zwischen der jeweiligen Oberseite von unterem Träger 7 und oberem Träger 8 kleiner sein als der Arbeitsabstand 9 der Fokussieroptik 3. Andernfalls ist nicht möglich, den Fokus 5 am unteren Träger 7 zu positionieren und dort verfestigtes Material anzulagern. Im Falle einer anfänglichen Anlagerung an der Unterseite des oberen Trägers 8 könnte zwar der Abstand zwischen unterem Träger 7 und oberen Träger 8 größer sein als der Arbeitsabstand 9 der Fokussieroptik 3. Allerdings wäre dann eine Verfestigung nur mit eingeschränktem Abstand zum oberen Träger 8 möglich, der dem Arbeitsabstand 9 abzüglich der Dicke des oberen Trägers 8 entspricht. Geometrie und Größe der erzeugbaren Strukturen sind damit in nicht erwünschter Weise begrenzt.

Fig. 2 zeigt eine erste Ausführungsform der Erfindung, bei der eine Belichtung des zu verfestigenden Materials durch einen Materialbehälter 10 hindurch erfolgt. Im dargestellten Fall wird durch den Boden 11 des Materialbehälters 10 hindurch von unten belichtet, indem ein in der Laserquelle 1 erzeugter unfokussierter Laserstrahl 4 über einen Umlenkspiegel 2 zu einer unterhalb des Materialbehälters 10 angeordneten Fokussieroptik 3 geleitet wird. Der Umlenkspiegel 2 kann positionierbar ausgebildet sein. Der Strahl wird von dieser in das in dem Materialbehälter 10 aufgenommene zu verfestigende Material 6 fokussiert. Wie auch bei der Vorrichtung nach Fig. 1 ist die maximale Tiefe, in die der Fokus in das zu verfestigende Material 6 eingebracht werden kann, durch den Arbeitsabstand 9 der Fokussieroptik 3 begrenzt. Um eine hierdurch bewirkte Größenbeschränkung der erzeugbaren Strukturen vermeiden zu können, weist die in Fig. 2 dargestellte Vorrichtung eine gegenüber dem Materialbehälter 10 positionierbare Trägereinheit 12 auf. Die Trägereinheit 12 ist in das in dem Materialbehälter 10 befindliche zu verfestigende Material 6 eingetaucht. Im dargestellten Beispiel ist die Trägereinheit 12 in Z-Richtung positionierbar, während die Fokussieroptik 3 in X- und Y-Richtung positionierbar ist.

In Fig. 2 ist ebenfalls beispielhaft der Beginn der Erzeugung einer Struktur dargestellt. Dabei ist die Trägereinheit 12 derart zu Materialbehälter 10 und Fokus 5 positioniert, dass der Fokus an die untere Fläche der Trägereinheit 12 angrenzt. Im Bereich des Fokus 5 verfestigtes Material scheidet sich an der Unterseite der Trägereinheit 12 ab und haftet an dieser an. Abgestimmt auf die Abmessungen bereits verfestigter Volumenelemente kann die Trägereinheit 12 in Z-Richtung positioniert werden, so dass der Fokus an einer Grenzfläche bereits verfestigten Materials zu liegen kommt und sich nachfolgend verfestigtes Material an bereits verfestigtem Material anlagert und dort anhaftet. Durch eine Positionierung der Fokussieroptik 3 in X- sowie Y-Richtung und entsprechende Einbringung von Laserpulsen wird die Lage der Verfestigung in X- bzw. Y-Richtung bestimmt. Durch die in Z-Richtung positionierbare Trägereinheit und entsprechende Verfahrungsführung wird ermöglicht, Strukturen zu verfestigen, deren Abmessungen vom Arbeitsabstand 9 der verwendeten Fokussieroptik 3 unabhängig und insbesondere größer sind.

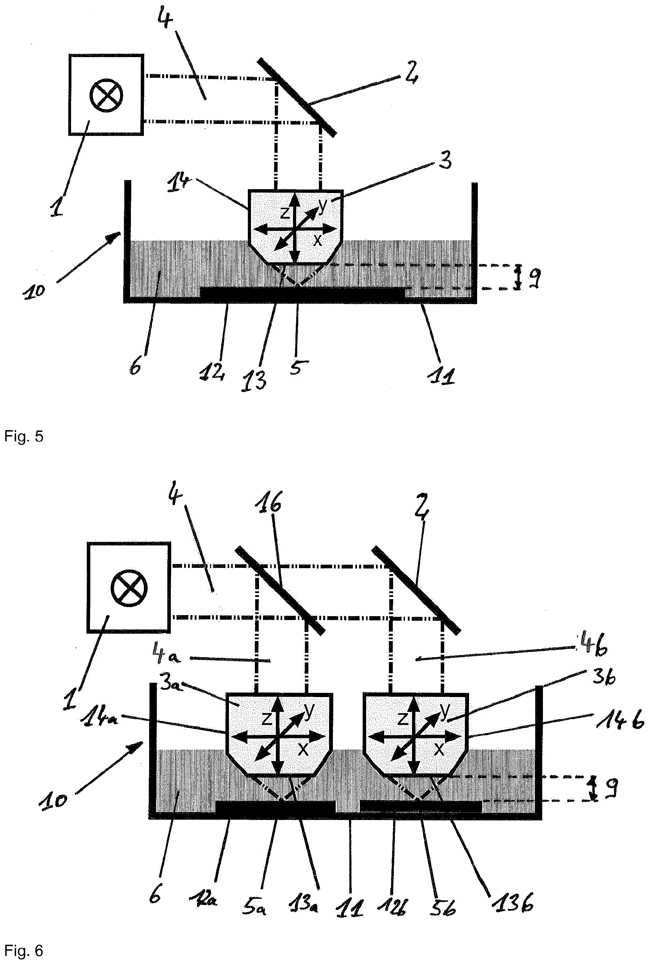

Fig. 5 zeigt eine andere Vorrichtung in einer weiteren schematischen Darstellung. Die Vorrichtung weist wiederum eine Laserquelle 1 auf, wobei ein aus dieser austretender unfokussierter Laserstrahl 4 über einen Umlenkspiegel 2 zu einer Fokussieroptik 3 geleitet wird. Sie weist des Weiteren einen Materialbehälter 10 mit zu verfestigendem Material 6 sowie einer Trägereinheit 12 auf. Diese ist im gezeigten Beispiel nicht verfahrbar, kann grundsätzlich jedoch in eine oder mehrere Richtungen positionierbar sein. Die Einleitung der Laserstrahlung in das zu verfestigende Material 6 erfolgt über die Fokussieroptik 3, die in das zu verfestigende Material 6 eingetaucht ist.

Die Fokussieroptik 3 weist ein Gehäuse 14 mit einer Strahlausgangsfläche 13 auf und ist im dargestellten Beispiel in die drei Raumrichtungen X, Y und Z positionierbar. Durch Eintauchen der Fokussieroptik 3 bildet deren Strahlausgangsfläche 13 eine optisch definierte Grenzfläche zum zu verfestigenden Material 6 aus, wodurch eine definierte und genaue Einbringung der Laserstrahlung in das zu verfestigende Material 6 möglich ist.

Fig. 5 zeigt abermals die Vorrichtung zu Beginn eines Strukturierungsprozesses, bei dem die Fokussieroptik 3 relativ zur Trägereinheit 12 im Arbeitsabstand 9 angeordnet ist, so dass der Fokus 5 an die Oberfläche der Trägereinheit 12 angrenzt. Durch entsprechende Positionierung in X- sowie Y-Richtung wird die Verfestigung und Anlagerung in X- bzw. Y-Richtung bestimmt. Nach anfänglicher Verfestigung an der Trägereinheit 12 kann die Strukturierung durch entsprechende Positionierung der Fokussieroptik 3 in Z-Richtung abgestimmt auf die Stärke bereits verfestigten und an der Trägereinheit 12 anhaftenden Materials durchgeführt werden. Auch bei dieser Ausführungsform der Erfindung ist die Höhe der erzeugbaren Strukturen nicht durch den Arbeitsabstand 9 der Fokussieroptik 3 beschränkt.

Die vorliegende Erfindung verwendet für alle möglichen Ausführungsformen eine Fokussieroptik 3 mit hoher NA, zumindest mit einer NA von größer 0,25, um die gewünschte hohe Auflösung bzw. kleine Voxel zu erzielen. Die Arbeitsabstände 9 der Objektive liegen vorzugsweise zwischen 0,1 und 100 mm, stärker bevorzugt zwischen 1 und 10 mm. Dazu ist zu betonen, dass natürlich der Fokusbereich 5 der Fokussieroptik im Inneren des Bades 10 liegen muss. Daher ist bei der Wahl des richtigen Arbeitsabstandes auch die Dicke des transparenten Badbodens, welcher durchdrungen werden muss, zu berücksichtigen. Günstig ist, es, die Dicke des Badbodens im Bereich von 0,1 bis 20 mm, vorzugsweise im Bereich von 0,5 bis 5 mm zu wählen. Für die Distanz von Fokusbereich 5 zu Badboden sind Werte von 0,1 bis 2 mm am günstigsten. Bei geringeren Werten besteht die Gefahr, dass das Material direkt am Boden verfestigt wird und dort anhaftet. Die Folge dessen wäre, dass das Herausfahren der Trägereinheit 12 behindert wäre. Bei Werten oberhalb des günstigen Bereichs ist mit zunehmenden Abbildungsfehlern (vor allem sphärische Aberration) zu rechnen. Dadurch, dass erfindungsgemäß die Fokussieroptik zumindest in einer Ebene (meist der horizontalen, also der X-Y-Ebene) bewegt wird, kommt es auf die Größe der gewählten NA nicht zwingend an, zumindest bei einem Mindestwert von 0,25.

In einem Beispiel der Erfindung wird ein Hoch-NA Objektiv mit NA=1.4 und einem Arbeitsabstand von 200 µm verwendet, das so gefertigt ist, dass sich ein idealer Brennpunkt ausbildet, wenn ein 170 µm dicker Behälterboden benutzt wird, zwischen Austrittslinse und Behälterboden Immersionsöl aufgebracht wird und der Abstand des Objektivs so gewählt ist, dass der Brennpunkt unmittelbar oberhalb der Behälterboden-Innenseite liegt, und zwar derart, dass das entstehende Voxel nicht am Behälterboden festkleben kann.

Die Einkopplung des Laserstrahls in die Fokussieroptik erfolgt erfindungsgemäß vorzugsweise über ein System von Spiegeln, wie es in der Figur 12 dargestellt ist.

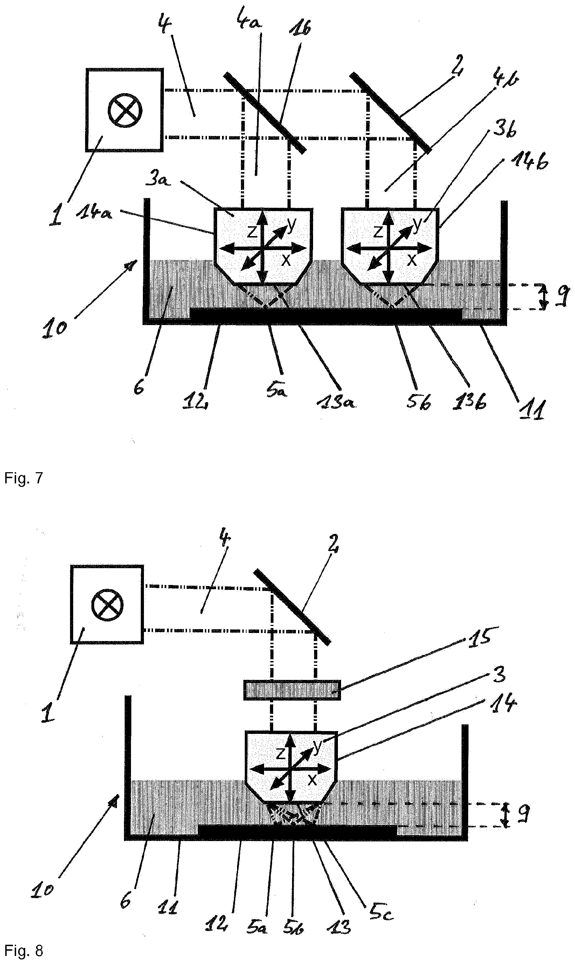

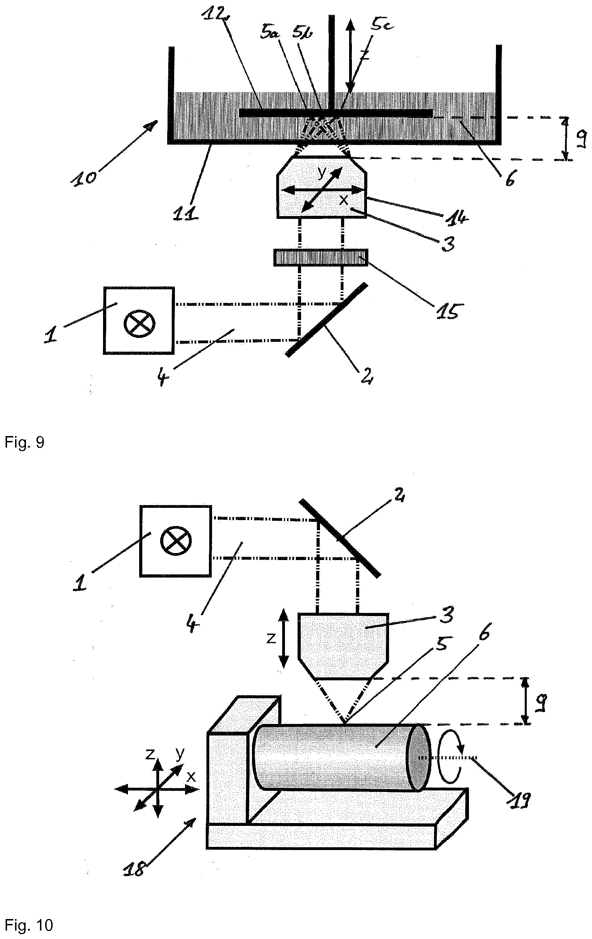

Fig. 8 zeigt eine Vorrichtung, die von ihrem Aufbau im Wesentlichen der Ausführungsform nach Fig. 5 entspricht. Als zusätzliches Element ist ein Strahlformungselement 15 bspw. in Form einer Phasen- oder Amplitudenmaske im Strahlgang zwischen Umlenkspiegel 2 und Fokussieroptik 3 angeordnet. Durch die Verwendung des Strahlformungselements 15 wird die Laserstrahlung über die Fokussieroptik 3 in mehrere Foki 5a, 5b und 5c fokussiert, so dass an mehreren Stellen gleichzeitig zu verfestigendes Material 6 verfestigt werden kann. Die Anzahl der Verfestigungsstellen entspricht dabei der Anzahl n der erzeugten Foki (Parallelisierung). Fig. 9 zeigt eine entsprechende Verwendung eines Strahlformungselements 15 im Rahmen einer Vorrichtung gemäß dem Ausführungsbeispiel der Fig. 2. Auf die vorstehende Beschreibung zur Fig. 2 wird Bezug genommen.

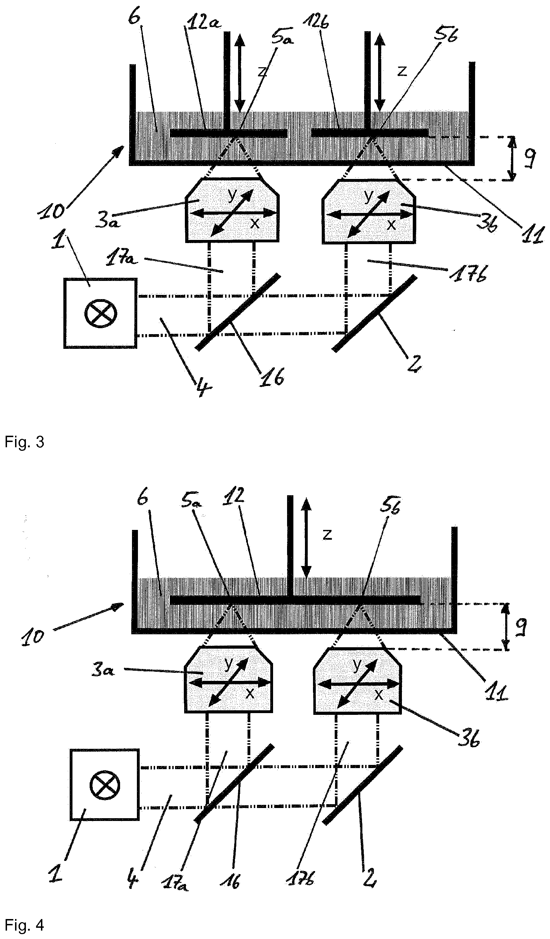

Weitere Vorrichtungen mit Parallelisierung sind in den Fig. 3, 4, 6 und 7 dargestellt. Dabei wird die Parallelisierung jeweils durch Verwendung eines halbdurchlässigen Umlenkspiegels 16 erzielt, der den aus der Laserquelle 1 austretenden unfokussierten Laserstrahl 4 in zwei Teilstrahlen 17a, 17b aufteilt, die jeweils zu einer eigenständigen Fokussieroptik 3 geleitet werden.

Die Vorrichtungen nach den Fig. 3 und 6 weisen zwei in das zu verfestigende Material 6 eingetauchte Trägereinheiten 12a und 12b auf, die gemeinsam oder unabhängig voneinander in Z-Richtung positioniert werden können. Mit diesen Vorrichtungen können gleichzeitig durch entsprechende Ansteuerung der Positionierungsachsen Strukturen unterschiedlicher Geometrie erzeugt werden. Die Fig. 4 und 7 zeigen Vorrichtungen, bei denen mittels Parallelisierung an mehreren Stellen gleichzeitig auf einer Trägereinheit 12 geschrieben werden kann, die in das zu verfestigende Material eingetaucht ist.

Weitere Vorrichtungen sind in den Fig. 10 und 11 dargestellt. Anstelle einer nur linear positionierbaren Trägereinheit 12 wird hier ein Drehtisch 18 verwendet, der zusätzlich oder alternativ zu einer Linearpositionierung eine Drehpositionierung z. B. um eine Rotationsachse 19 ermöglicht. Der in der Fig. 10 dargestellte Drehtisch 18 dient der Positionierung einer folienförmigen Trägereinheit mit zu verfestigendem Material 6 relativ zum Fokus 5.

Bei der in Fig. 11 dargestellten Vorrichtung taucht eine um eine Rotationsachse 19 drehbare und linear in Z-Richtung positionierbare Trägereinheit 12 in ein Bad aus zu verfestigendem Material ein. Die Fokussieroptik 3 ist in X- und Y-Richtung linear positionierbar. Die Fokuslage ist so eingestellt, dass sich Material 6 an der Trägereinheit 12 verfestigt, abscheidet und quasi aufgewickelt wird.

### Bezugszeichenliste.

- 1: Laserquelle
- 2: Umlenkspiegel
- 3: Fokussieroptik
- 4: unfokussierter Laserstrahl
- 5: Fokus
- 6: zu verfestigendes Material
- 7: unterer Träger
- 8: oberer Träger
- 9: Arbeitsabstand
- 10: Materialbehälter
- 11: Boden
- 12: Trägereinheit
- 13: Strahlausgang
- 14: Gehäuse
- 15: Strahlformungselement
- 16: halbdurchlässige Umlenkspiegel
- 17a,b: Teilstrahlen
- 18: Drehtisch
- 19: Rotationsachse

## Patentansprüche

1. Vorrichtung zur Erzeugung dreidimensionaler Strukturen aus einem zu verfestigenden Material (6), insbesondere aus einem organopolysiloxanhaltigem Material, durch ortsselektives Verfestigen desselben infolge lichtinduzierter organischer Vernetzung, aufweisend:
eine Laserquelle (1),
eine bewegbare Fokussieroptik (3) zur Ausbildung eines oder mehrerer Laserfoki (5) und einen Materialbehälter (10) für das zu verfestigende Material, wobei die Laserquelle und die Fokussieroptik zur Erzeugung von Laserpulsen bzw. Laserpulsfolgen ausgebildet sind, die in ihrem Brennpunkt eine Zwei- oder Mehrphotonen-Polymerisation des zu verfestigenden Materials auslösen, und wobei die Fokussieroptik eine Numerische Apertur von >0,25 aufweist,
wobei der Materialbehälter wenigstens teilweise aus einem für die verwendete Laserstrahlung durchlässigen Material besteht und so im Strahlengang angeordnet oder anordbar ist, dass die Laserstrahlung durch den Materialbehälter in das zu verfestigende Material einbringbar ist, wobei der Materialbehälter unbewegt bleibt und als optisch definierte Grenzfläche wirkt, wobei
in dem Materialbehälter eine gegenüber diesem positionierbare Trägereinheit (12) angeordnet ist, und ein optisches Detektionssystem zum in-situ Vermessen einer bereits in das Material eingebrachten Struktur und/oder der als Substrat wirkenden Trägereinheit (12).

2. Vorrichtung nach Anspruch 1, **dadurch gekennzeichnet, dass** die Fokussieroptik zumindest in horizontaler (X-Y-)Ebene bewegbar ist.

3. Vorrichtung nach einem der voranstehenden Ansprüche, **dadurch gekennzeichnet, dass** die Fokussieroptik (3) eine Numerische Apertur von >0,5 und vorzugsweise von >1,0 besitzt.

4. Vorrichtung nach einem der voranstehenden Ansprüche, **dadurch gekennzeichnet, dass** der Arbeitsabstand zwischen einem Objektiv der Fokussieroptik (3) und dem zugehörigen Laserfokus zwischen 0,1 und 100 mm, bevorzugt zwischen 1 und 10 mm liegt.

5. Vorrichtung nach einem der vorhergehenden Ansprüche, **dadurch gekennzeichnet, dass** sie eine Optik (16) zur räumlichen Aufteilung des Laserstrahls (17a, 17b) und Erzeugung wenigstens zweier räumlich voneinander beabstandeter Laserfoki (5a, 5b) oder Intensitätsmaxima aufweist.

6. Vorrichtung nach Anspruch 5, **dadurch gekennzeichnet, dass** das Detektionssystem eine Lichtquelle sowie ein elektronisches Erfassungssystem aufweist.

7. Vorrichtung nach Anspruch 6, **dadurch gekennzeichnet, dass** das Detektionssystem die Topographie der Trägereinheit zumindest teilweise detektiert und mit einem Regelungssystem verbunden ist, welches möglicherweise vom Sollwert abweichende Oberflächenpunkte derart erfasst, dass diese optisch korrekt angesteuert werden.

8. Vorrichtung nach einem der vorhergehenden Ansprüche, des Weiteren aufweisend ein Dispensersystem zur in-situ Deposition für das zu verfestigende Material.

9. Verfahren zur Erzeugung dreidimensionaler Strukturen aus einem zu verfestigendem Material (6), insbesondere aus organopolysiloxanhaltigem Material, durch ortsselektives Verfestigen desselben infolge lichtinduzierter organischer Vernetzung aufgrund einer Bestrahlung mittels Laser (1),
wobei das zu verfestigende Material in einem Materialbehälter (10) angeordnet ist oder wird, der Materialbehälter wenigstens bereichsweise für den verwendeten Laser durchlässig ist und während des Verfahrens nicht bewegt wird, mit Hilfe einer bewegbaren Fokussieroptik (3) mit einer Numerischen Apertur von >0,25 ein Laserpuls oder eine Laserpulsfolge durch den Materialbehälter hindurch in das zu verfestigende Material auf wenigstens einen Laserfokus (5) positioniert wird, so dass der Materialbehälter eine optisch definierte Grenzfläche ausbildet, über die der Laser in das zu verfestigende Material eingeleitet wird, wobei der Laserpuls oder die Laserpulsfolge in seinem/ihrem Brennpunkt eine Zwei- oder Mehrphotonen-Polymerisation des zu verfestigenden Materials auslöst/auslösen, derart, dass lediglich in der unmittelbaren Umgebung des wenigstens einen Laserfokus aufgrund der dortigen Intensität Verfestigungsbedingungen erreicht werden, so dass während der Dauer des Laserpulses bzw. der Laserpulsfolge je Fokus ein Volumenelement des zu verfestigenden Materials verfestigt wird,
wobei
in dem zu verfestigenden Material eine Trägereinheit (12) relativ zu dem wenigstens einen Laserfokus so positioniert wird, dass sich das zu verfestigende Material bei der Verfestigung an der Trägereinheit oder an bereits an der Trägereinheit verfestigtem Material anlagert, wobei die Trägereinheit relativ zu dem Materialbehälter positionierbar ist,
und wobei eine bereits in das Material eingebrachte Struktur und/oder die als Substrat wirkende Trägereinheit in-situ mit einem Detektionssystem vermessen werden.

10. Verfahren nach Anspruch 9, **dadurch gekennzeichnet, dass** die Fokussieroptik zumindest in horizontaler (X-Y-) Ebene bewegbar ist.

11. Verfahren nach einem der Ansprüche 9 und 10, **dadurch gekennzeichnet, dass** ein Laserstrahl in wenigstens zwei Teilstrahlen (17a, 17b) aufgeteilt wird und/oder wenigstens zwei räumlich voneinander beabstandete Laserfoki (5a, 5b) oder Intensitätsmaxima erzeugt werden.

12. Verfahren nach einem der Ansprüche 9 bis 11, **dadurch gekennzeichnet, dass** das zu verfestigende Material über ein Dispensersystem in situ dem Materialbehälter zugeführt wird.

13. Verfahren nach Anspruch 9, **dadurch gekennzeichnet, dass** die Trägereinheit eine Trägerbahn ist, die von einer Rolle abgewickelt, in einer Richtung (X-Richtung) durch das zu verfestigende Material im Materialbehälter gezogen und nach Entfernen der darauf erzeugten dreidimensionalen Struktur(en) wieder aufgewickelt wird, wobei die Ziehbewegung diskontinuierlich oder kontinuierlich erfolgt.

## Claims

1. Device for producing three-dimensional structures of a material (6) to be consolidated, in particular from an organopolysiloxane-containing material, by locally-selective consolidation of the latter as a result of light-induced organic crosslinking, comprising:
a laser source (1),
a movable focusing optics (3) for the formation of one or a plurality of laser foci (5) and a material container (10) for the material to be consolidated, the laser source and the focusing optics being adapted to generate laser pulses or laser pulse sequences, respectively, which produce a two- or multi-photon polymerization of the material to be consolidated at their focal point, and wherein the focusing optics has a numerical aperture of >0.25,
wherein the material container consists at least partially of a material which is transparent to the laser radiation used and is arranged or arrangeable in the beam path in such a way that the laser beam can be introduced into the material to be solidified through the material,
wherein the material container remains stationary and acts as an optically defined boundary surface, and wherein a carrier unit (12) is arranged in the material container and can be positioned in relation to the latter, and
an optical detection system for in-situ measuring of a structure already introduced into the material and/or of the carrier unit (12) acting as substrate.

2. Device according to claim 1,
**characterized in that** the focusing optics can be moved at least in the horizontal (X-Y) plane.

3. Device according to one of the preceding claims,
**characterized in that** the focusing optics (3) has a numerical aperture of >0.5 and preferably of >1.0.

4. Device according to one of the preceding claims,
**characterized in that** the working distance between an objective of the focusing optics (3) and the associated laser focus is between 0.1 and 100 mm, preferably between 1 and 10 mm.

5. Device according to one of the preceding claims,
**characterized in that** it comprises an optical system (16) for spatially dividing the laser beam (17a, 17b) and generating at least two spatially spaced laser foci (5a, 5b) or intensity maxima.

6. Device according to claim 5,
**characterized in that** the detection system comprises a light source and an electronic detection system.

7. Device according to claim 6,
**characterized in that** the detection system at least partially detects the topography of the carrier unit and is connected to a control system which detects surface points which possibly deviate from the desired value in such a way that these are controlled optically correctly.

8. Device according to any of the preceding claims further comprising a dispenser system for in-situ deposition of the material to be consolidated.

9. A method for producing three-dimensional structures from a material (6) to be consolidated, in particular from organopolysiloxane-containing material, by locally-selective consolidation of the same as a result of light-induced organic crosslinking due to irradiation by means of a laser (1),
wherein the material to be consolidated is provided or is arranged in a material container (10), the material container is permeable to the laser employed at least in regions and is not moved during the process, using a movable focusing optical system (3) with a numerical aperture of >0.25 for positioning a laser pulse or a laser pulse sequence through the material container into the material to be consolidated onto at least one laser focus (5), so that the material container forms an optically defined interface through which the laser is introduced into the material to be consolidated, wherein the laser pulse or the laser pulse sequence triggers a two- or multi-photon polymerization of the material to be consolidated at its focal point in such a way that consolidation conditions are achieved only in the immediate vicinity of the at least one laser focus due to the intensity of the consolidation conditions therein, so that a volume element of the material to be consolidated is consolidated in the course of the duration of the laser pulse or the laser pulse sequence per focus,
wherein a carrier unit (12) is positioned within the material to be consolidated relative to the at least one laser focus such that, during consolidation, the material to be consolidated adheres to the carrier unit or to material previously consolidated on the carrier unit, wherein the carrier unit can be positioned relative to the material container, and wherein a structure previously introduced into the material and/or the carrier unit acting as substrate are measured in situ using a detection system.

10. Method according to claim 9,
**characterized in that** the focusing optics can be moved at least in the horizontal (X-Y) plane.

11. Method according to any of claims 9 and 10,
**characterized in that** a laser beam is divided into at least two partial beams (17a, 17b) and/or at least two spatially spaced laser foci (5a, 5b) or intensity maxima are generated.

12. Method according to one of claims 9 to 11,
**characterized in that** the material to be consolidated is supplied in situ to the material container via a dispenser system.

13. Method according to claim 9,
**characterized in that** the carrier unit is a carrier strip which is unwound from a roll, drawn into one direction (X-direction) through the material to be consolidated in the material container and rewound after removal of the three-dimensional structure(s) produced thereon, the drawing movement taking place discontinuously or continuously.

## Revendications

1. Dispositif de production de structures tridimensionnelles en un matériau à solidifier (6), en particulier en un matériau contenant des organopolysiloxanes, par solidification localement sélective de celui-ci à la suite d'une réticulation organique induite par la lumière, présentant:
une source laser (1),
une optique de focalisation mobile (3) pour la formation d'un ou de plusieurs foyer(s) laser (5) et un réservoir de matériau (10) pour le matériau à solidifier, dans lequel la source laser et l'optique de focalisation sont conçues pour la production d'impulsions laser ou de suites d'impulsions laser, qui déclenchent à leur foyer une polymérisation à deux photons ou plus, et dans lequel l'optique de focalisation présente une ouverture numérique de > 0,25,
dans lequel le réservoir de matériau se compose au moins en partie d'un matériau perméable au rayonnement laser utilisé et est ou peut être disposé dans le trajet des rayons, de telle manière que le rayonnement laser puisse être introduit à travers le réservoir de matériau dans le matériau à solidifier, dans lequel le réservoir de matériau reste immobile et agit comme face limite optiquement définie,
dans lequel une unité de support (12), qui peut être positionnée par rapport au réservoir de matériau, est disposée dans celui-ci, et
un système de détection optique pour mesurer une structure déjà introduite dans le matériau et/ou l'unité de support (12) agissant en tant que substrat.

2. Dispositif selon la revendication 1, **caractérisé en ce que** l'optique de focalisation est déplaçable au moins dans un plan horizontal (X-Y).

3. Dispositif selon l'une quelconque des revendications précédentes, **caractérisé en ce que** l'optique de focalisation (3) possède une ouverture numérique de > 0,5 et de préférence de > 1,0.

4. Dispositif selon l'une quelconque des revendications précédentes, **caractérisé en ce que** la distance de travail entre un objectif de l'optique de focalisation (3) et le foyer laser correspondant se situe entre 0,1 et 100 mm, de préférence entre 1 et 10 mm.

5. Dispositif selon l'une quelconque des revendications précédentes, **caractérisé en ce qu'**il présente une optique (16) pour la distribution spatiale du faisceau laser (17a, 17b) et la production d'au moins deux foyers laser (5a, 5b) ou de maxima d'intensité spatialement espacés l'un de l'autre.

6. Dispositif selon la revendication 5, **caractérisé en ce que** le système de détection présente une source de lumière ainsi qu'un système de détection électronique.

7. Dispositif selon la revendication 6, **caractérisé en ce que** le système de détection détecte au moins partiellement la topographie de l'unité de support et est relié à un système de régulation, qui détecte des points de la surface s'écartant éventuellement de la valeur de consigne, de telle manière que ceux-ci soient commandés optiquement de façon correcte.

8. Dispositif selon l'une quelconque des revendications précédentes, présentant en outre un système de distributeur pour le dépôt in situ pour le matériau à solidifier.

9. Procédé de production de structures tridimensionnelles en un matériau à solidifier (6), en particulier en un matériau contenant des organopolysiloxanes, par solidification localement sélective de celui-ci à la suite d'une réticulation organique induite par la lumière en raison d'une irradiation au moyen d'un laser (1), dans lequel on a disposé ou on dispose le matériau à solidifier dans un réservoir de matériau (10), le réservoir de matériau est au moins localement perméable au laser utilisé et n'est pas déplacé pendant le procédé, on positionne à l'aide d'une optique de focalisation déplaçable (3) avec une ouverture numérique > 0,25 une impulsion laser ou une suite d'impulsions laser à travers le réservoir de matériau dans le matériau à solidifier sur au moins un foyer laser (5) de telle manière que le réservoir de matériau forme une face limite optiquement définie, par laquelle on introduit le laser dans le matériau à solidifier,
dans lequel l'impulsion laser ou la suite d'impulsions laser déclenche à son foyer une polymérisation à deux photons ou plus du matériau à solidifier, de telle manière que l'on n'atteigne des conditions de solidification que dans les environs immédiats dudit au moins un foyer laser en raison de l'intensité locale, de telle manière que pendant la durée de l'impulsion laser ou de la suite d'impulsions laser un élément de volume du matériau à solidifier soit solidifié par foyer,
dans lequel on positionne dans le matériau à solidifier une unité de support (12) par rapport audit au moins un foyer laser, de telle manière que le matériau à solidifier se dépose lors de la solidification sur l'unité de support ou sur du matériau déjà solidifié sur l'unité de support, dans lequel l'unité de support peut être positionnée par rapport au réservoir de matériau, et
dans lequel on mesure une structure déjà introduite dans le matériau et/ou l'unité de support agissant comme substrat in situ avec un système de détection.

10. Procédé selon la revendication 9, **caractérisé en ce que** l'optique de focalisation est déplaçable au moins dans un plan horizontal (X-Y).

11. Procédé selon une des revendications 9 ou 10, **caractérisé en ce que** l'on divise un faisceau laser en au moins deux faisceaux partiels (17a, 17b) et/ou on produit au moins deux foyers laser (5a, 5b) ou des maxima d'intensité spatialement espacés l'un de l'autre.

12. Procédé selon l'une quelconque des revendications 9 à 11, **caractérisé en ce que** l'on fournit le matériau à solidifier in situ au réservoir de matériau au moyen d'un système de distributeur.

13. Procédé selon la revendication 9, **caractérisé en ce que** l'unité de support est une bande de support, qui est déroulée d'un rouleau, tirée (direction X) à travers le matériau à solidifier dans le réservoir de matériau et de nouveau enroulée après l'enlèvement de la/des structure(s) tridimensionnelle(s) produite(s) sur celle-ci, dans lequel le mouvement de traction est effectué de façon discontinue ou continue.
